# EUROPEAN PATENT SPECIFICATION

(11) **EP 1 898 109 B1**
(45) Date of publication and mention of the grant of the patent: **23.07.2014**
(21) Application number: 07253533.9
(22) Date of filing: 06.09.2007
(51) Int. Cl.: F16C 35/02, B63H 23/32

(54) **Shaft bearing assembly, retaining key assembly and method of installation**
Wellenlageranordnung, Halteschlüsselanordnung und Installationsverfahren
Ensemble de support pour arbre, ensemble de clés de rétention et procédé d'installation

(30) Priority: 09.09.2006 GB 0617761
(43) Date of publication of application: 12.03.2008
(73) Proprietor: Trelleborg Sealing Solutions UK Limited, Gloucestershire GL20 8JS (GB)
(72) Inventor: Tarrant, Brian, Trelleborg Sealing, Rotherham South Yorkshire S60 1BX (GB); Walker, Shaun, Trelleborg Sealing, Rotherham South Yorkshire S60 1BX (GB)
(74) Representative: Cooke, Tracey

(56) References cited:
- DE-A1- 2 407 415
- GB-A- 1 384 072

## Description

This invention relates to shaft bearings, particularly but not exclusively marine propeller shaft bearings, and to retaining keys and methods for installing such bearings in a housing.

Marine propeller shafts are mounted in bearings which comprise a layer ofbearing material arranged in a tubular housing. Traditionally such bearings were formed from staves of lignum vitae and lubricated by seawater. Later, oil lubricated white metal bearings were introduced. Today such bearings are often formed from polymers and lubricated by the circulation of raw or filtered seawater, or alternatively by a recirculated biodegradeable lubricant.

GB 1 384 072 discloses a railway vehicle bearing assembly comprising a liner which is fixed in a bearing block by means of tapered keys.

Housings for marine propeller shaft bearings may be permanently fixed (for example, by resin chocking) into the hull or stem tube or (especially in naval ships) into a rigid strut or "A frame" which supports the propeller shaft externally of the hull.

Modem housings are typically smooth bored, so it is important to ensure that the bearing cannot rotate with the shaft. This may be achieved by providing an interference fit between the bearing and the housing. A polymer bearing may be formed as a cylinder (or several cylinders arranged end to end) and frozen in liquid nitrogen or solid carbon dioxide (dry ice) to shrink it before it is driven or pressed into the housing from one end. Once installed the bearing expands sufficiently to prevent rotation. However, since the bearing begins to warm up as soon as it contacts the housing, installation of large, one-piece bearings can be difficult. Moreover, very low ambient temperatures or a very rapid and severe temperature change may cause the bearing to loosen and begin to rotate destructively in the housing. Dry running may also result in heating and loosening of the bearing.

Alternatively, the bearing may be bonded into the housing by means of a suitable adhesive. This simplifies installation but makes it difficult to remove the bearing for replacement.

In order to guard against bearing rotation, many smooth bored marine propeller shaft bearing housings are provided with a fixed key or keys which extend axially along the housing bore at the 90° (3 o'clock) and/or 270° (9 o'clock) position. The bearing is divided so that its axial edges abut the key or keys and prevent the bearing from rotating with the shaft.

In order to avoid the need to remove the propeller shaft, a propeller shaft housing and bearing may be split into upper and lower halves along an axial horizontal joint so that they can be disassembled and removed together in dry dock while the shaft remains in place.

For larger ships and naval vessels in particular (for which unscheduled dry docking would be expensive or impossible) it is highly desirable that the propeller shaft bearings should be capable of replacement with the shaft in place, while the vessel is at sea. The size and weight of the housings on a large propeller shaft (which may approach 0.5m or more in diameter) can make it impractical to remove split housings at sea, particularly for divers working on A frame bearings beneath the hull, so it is preferred to provide a fixed housing from which the bearings may be removed from the annular gap between the housing and the shaft.

This may be achieved by providing the housing bore at the 3 o'clock or 9 o'clock position with a fixed axial key which has a slight taper along its length. The bearing is formed in upper and lower halves which are slid into the gap between the housing and the shaft, and are dimensioned so as to leave a narrow gap between one edge of the bearing and the tapered edge of the key.

A second, removable key having a corresponding taper is then inserted with its narrow end into the gap so that it is supported by the fixed key, and then driven or pressed in axially so that the two tapering edges of the keys cooperate to expand the key assembly. The resulting hoop stress expands the bearing between the housing and the shaft, while the fixed key retains the bearing against rotation. When it is desired to remove the bearing, the removable key is first extracted, relieving the hoop stress in the bearing, so that the bearing sections can be slid out along the shaft and removed.

Propeller shaft bearings are typically designed with a ratio of bearing length to shaft diameter of from 2:1 to 4:1. Since the removable key necessarily extends for the full length of the bearing, it can therefore range from 1 to 2 metres in length for a bearing on a 0.5m diameter shaft. Moreover, the key is necessarily of limited width and hence has a relatively long and narrow shape, while its thickness is of course less than that of the bearing, with an allowance for bearing wear, to avoid contact with the shaft.

As the rotational speed of the horizontal propeller shaft increases, its weight is progressively displaced from the bottom (180° or 6 o'clock) point on the circumference of the bearing by, typically, up to 60° of arc in the opposite direction from its direction of rotation. The rotating shaft also begins to generate a hydrodynamic film which separates the shaft from the bearing, reducing friction.

In order to assist the development of the hydrodynamic film and to avoid any possibility of the key contacting the shaft, it is undesirable to locate the key or joints or grooves in the bearing in the bottom 120° of arc on the circumference of the bearing. Where the bearing is formed in two halves to facilitate its removal from around the shaft, the joints (and hence also the key) are therefore arranged around the shaft at the 3 o'clock and 9 o'clock positions, i.e. at 90° or 270°. This also makes it easier to refit the shaft after it has been removed from the housing, by installing the bottom section of the bearing prior to inserting the shaft into the housing.

Water lubricated bearings are traditionally provided on their inner surface with a number of narrow axial grooves which facilitate the circulation of water. It has been found however that a bearing with only two, much larger axial grooves, located respectively at the 90° (3 o'clock) and 270° (9 o'clock) positions around the circumference of a horizontal shaft, and having an uninterrupted bearing surface in its lower region which bears the weight of the shaft, will develop a hydrodynamic film at lower shaft velocities and exhibit superior hydrodynamic performance over a wide range of shaft velocities than will a similar bearing with a larger number of conventional, narrow grooves.

Where the bearing is provided with two large, axial grooves in the 90° and 270° positions, the key is therefore positioned at the base of one of these grooves, and must necessarily be dimensioned so that the radial depth of the key does not exceed the minimum thickness of the bearing at the base of the axial groove, which is its thinnest point. In consequence, the key is necessarily very slender, and it is found to be very difficult to pull it out or drive it in without damaging it unless dockyard facilities are available. This makes it impractical to remove such bearings at sea, especially from an aft stem tube or A frame beneath the waterline.

During installation, the removable key is inserted into the housing until it contacts the tapered edge of the fixed key on one side and the bearing on the other. Due to the necessarily slight degree of taper, this point may occur when the key is inserted to only a small fraction of its length. At this point a mallet may be used to hammer the free (wider) end of the key so that hoop stress is generated between the bearing and the key assembly and housing. The frictional resistance increases as the bearing engages progressively with the bore of the housing, distributing the hoop stress around it.

Due to the length and slenderness of the removable key, it can be difficult in practice to apply sufficient striking force to its free end to overcome this frictional resistance while avoiding damage to the key.

Since polymer bearings are resiliently deformable, it is also found that as the removable key is inserted, the uneven distribution of force against the bearing (supported along the whole of one axial edge by the fixed key but along only part of its opposite axial edge by the partially inserted, removable key) can sometimes result in a very slight torsion in the bearing. This tends to resist the further insertion of the removable key and increases the force which must be applied.

In practice, these factors combine to make removal and replacement of the bearings a difficult and time consuming task, especially when it must be accomplished underwater.

It is the object of the present invention to provide a bearing assembly, a retaining key assembly therefor and a method of installation which permits shaft bearings, particularly large marine propeller shaft bearings, to be more easily installed and removed with the shaft and housing in place. Preferably the bearing assembly should be capable of being retrofitted to existing housings and the hydrodynamic performance of the propeller shaft bearing should not be compromised.

According to its various aspects the present invention provides a bearing assembly, a key assembly, and a method, in accordance with the appended claims.

By providing a key assembly which is entirely independent of the housing, the invention enables easily removable and replaceable bearings to be fitted to virtually any smooth bored housing without requiring removal or modification of the housing. Where the shaft is generally horizontal, the bearing is preferably divided into at least two, and most preferably three elongate segments, and the key assembly is located at the 0° / 360° (12 o'clock) position. This avoids discontinuities in the lower segment of the bearing and enables the bearing to be assembled if required in a housing which is already fitted with a fixed anti-rotation key at the 3 o'clock or 9 o'clock position.

Moreover, even where the bearing incorporates enlarged axial water grooves at the 3 o'clock and 9 o'clock positions, the key assembly may be nearly the full thickness of the bearing at the 12 o'clock position. This makes the key assembly more robust and easier to handle than the much shallower single prior art key which is fitted alongside a fixed axial key at the base of the enlarged axial water groove.

It is found in practice that, even in the absence of a fixed axial key to support it while it is inserted, this additional thickness enables the novel key assembly to be much more easily driven or pressed into position without damaging it, and more easily engaged when it is withdrawn from the housing, which makes removal and replacement while at sea a practical option.

Preferably, the key assembly is dovetailed, which is to say that its outer edges which abut the bearing are arranged to diverge in the radially outward direction of the shaft in transverse section. This allows the key assembly to be rested on the top of the shaft as it is inserted; the hoop stress generated as the assembly is expanded then forces the key assembly radially outwards until it seats securely against the inner surface of the housing, away from the shaft.

It has surprisingly been found that the hoop stresses which may be generated by means of the novel removable key assembly are sufficient to reliably retain the bearing against rotation in its housing, even in the absence of any anti-rotation key fixed to the housing. The hoop stresses generated by the key assembly can substantially exceed the hoop stresses which are typically achieved by freeze fitting of unitary or stave bearings, and have been found in tests to be sufficient to prevent rotation of a bearing even when it is run dry at temperatures of 70°C - 80°C. Similarly, whereas it is known for freeze-fitted bearings to come loose and rotate in their housing when subjected to rapid temperature change, it has been found that this phenomenon is substantially prevented in bearings retained by the novel key assembly.

This advantage is believed to result at least in part from the independence of the key assembly from the housing. Since the whole of the key assembly is unattached to the housing, hoop stress is generated entirely between the respective axial edges of the bearing, instead of (as occurs with the prior art tapered key assembly) between one axial edge of the bearing on the one hand and, on the other, the housing and fixed key against which the removable key abuts. As a result, the hoop stress is more readily distributed around the circumference of the bearing during installation, especially at the point where the key assembly is nearing its final position and the bearing is tightly engaged against the housing. This both makes the key assembly easier to install and increases the overall hoop stress which may be induced in the bearing and hence the overall frictional engagement between the bearing and the housing around its entire circumference.

The invention may advantageously be applied, not only to propeller shaft bearings external of the ship's hull which require removal and replacement at sea, but also for example to conventional, freeze fitted bearings in smooth bored housings which are found difficult to install with an adequately tight interference fit due to the problem of warming of the bearing during installation. The invention may be employed for retro-fitting replacement shaft bearings in numerous other applications where it is impractical to remove and modify the bearing housing, in both marine and non-marine installations.

In a preferred embodiment the key assembly comprises two tapered keys which extend for the full length of the bearing. By driving in the two keys simultaneously from opposite directions, the further advantage is realised that, at the point where each key engages the bearing and begins to generate hoop stress, the protruding length of each key is only half that of a corresponding, single removable key as known in the art at the same point in the process of insertion. This makes it easier to apply sufficient force to the free end of each key without bending it. In practice, both keys may be installed simultaneously on a propeller shaft bearing beneath the hull of a ship while at sea by a team of two divers working, one at each end of the housing, or by a single diver working from both ends alternately.

The insertion of the two keys together from opposite directions also ensures that symmetrical forces are applied to the edges of the bearing and torsion is avoided.

Alternatively, both removable keys may be inserted from the same end of the housing until the wide end of the first key abuts a fixed retaining ring at the opposite end, the second key then being driven or pressed into its final position. Installation can then be accomplished by a single person working from one end of the housing.

Since both parts of the novel key assembly may be removed from the housing, additional clearance is obtained which assists in the removal of the bearing.

Further advantages and features will be apparent from the following illustrative embodiments which are described, purely by way of example and without limitation to the scope of the invention, and with reference to the accompanying drawings, in which:
Fig. 1 shows in side and end views, a first bearing and key assembly installed on a propeller shaft beneath the hull of a vessel;
Figs. 2A and 2B are respectively longitudinal sectional and end views of a bearing assembly according to the prior art;
Figs. 3A and 3B are respectively top plan and side views of the first key assembly;
Figs. 3C and 3D show the mutually abutting sides of each respective key of the first key assembly;
Figs. 4A and 4B show the first bearing assembly and housing in longitudinal section, with the shaft omitted for clarity, illustrating two alternative methods of installation of the first key assembly;
Fig. 4C is a view corresponding to Figs. 4A and 4B after installation of the first key assembly;
Figs. 5A, 5B and 5C are end views of the first bearing assembly and housing, again with the shaft omitted, showing respectively the first key assembly fully inserted; the key extraction tool installed; and the retaining ring installed;
Fig. 6 shows a hand pump for pumping lubricant between the keys; and
Fig. 7 is a scrap longitudinal section at line X - X of Fig. 5C.

Corresponding parts are indicated by the same reference numbers in each of the figures.

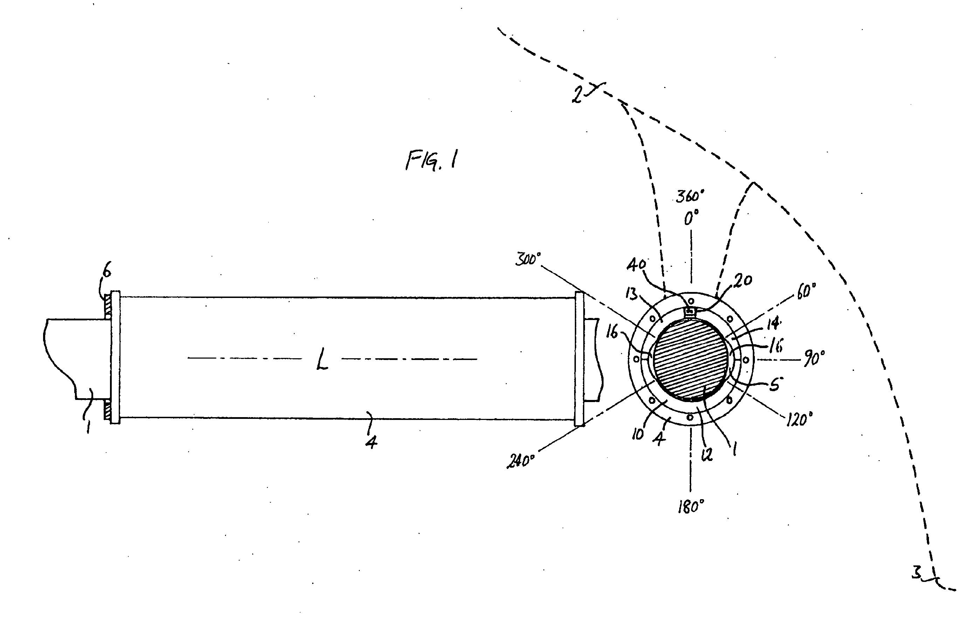

Referring to Fig. 1, a horizontal marine propeller shaft 1 is supported externally of the hull 2 and above the level of the keel 3 of a ship in a bronze housing 4. A plastics bearing 10 is arranged in the annular gap 5 between the propeller shaft and the housing, and retained in position by hoop stress generated by a first key assembly 20. In the end view shown, the retaining ring 6 (shown sectioned in the side view) has been removed to reveal the key extraction tool 40 which is installed on the adjacent ends of the key assembly.

In this specification the term "horizontal" is taken to embrace the range of inclination with respect to the longitudinal axis of the vessel typically encountered in conventional marine propeller shafts.

The bearing 10 is divided at the 90°, 270° and 360° positions as shown into three elongate segments. The bottom segment 12 thus extends for 180° to embrace the lower half of the circumference of the shaft, while the upper segments 13, 14 each embrace substantially 90° of the circumference of the shaft, allowing for the key assembly 20 which is inserted between their respective axial edges (which is to say, their edges which extend in parallel with the shaft). After extracting the key assembly 20, as further described below, the bearing segments may thus be withdrawn from between the shaft and housing and removed individually, while the shaft remains in place.

Two large, elongate water grooves 16 are formed at the 90° and 270° positions as shown so that they extend from 60° to 120° of circumference on one side of the shaft and from 240° to 300° on the other. This provides an uninterrupted area of bearing material in the zone from 120° to 240° which generally bears the weight of the shaft, which enhances the development of a lubricating hydrodynamic film in this zone as the shaft rotates.

In many housings, a fixed axial key is provided at the 90° or 270° position, and this can be accommodated between the axial edges of the bottom 12 and upper 13, 14 segments. Alternatively, the bearing may be divided into two segments, or more than three segments. Preferably however the bottom segment embraces at least the 120° to 240° zone. Each segment is preferably a single length, which assists its removal, but may if required be divided transversely into two or more lengths.

It is found that bearing wear occurs in particular in the lower part of the circumference of the bearing which normally bears the weight of the rotating shaft. Preferably the key assembly 20 is installed in the 300° to 60° zone, and most preferably in a position as shown vertically above the shaft at the 360° position. This enables the radial thickness of the key assembly 20 to be only slightly less than the maximum radial thickness of the bearing 10, while ensuring that the key assembly 20 cannot come into contact with the shaft as a result of bearing wear. At the same time, the lower 120° to 240° zone is uninterrupted, helping the development of a hydrodynamic film as the shaft begins to rotate, while the reduced thickness of the bearing at the axial grooves 16 does not constrain the thickness of the key assembly.

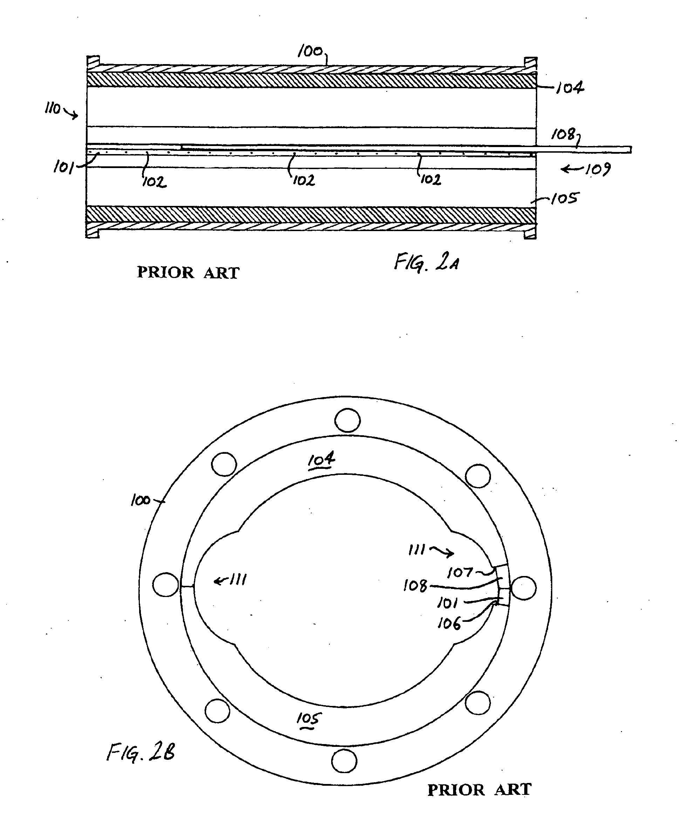

Referring to Figs. 2A and 2B, a prior art bearing assembly is shown by way of comparison, with the shaft omitted for clarity. A bronze housing 100 carries a permanent axial key 101 which is fixed at the 90° position by screws 102. The bearing is split into upper 104 and lower 105 segments and retained against rotation by its axial edges 106, 107 which abut the fixed key 101 and corresponding removable key 108.

The mutually abutting edges of the fixed and removable keys are tapered so that as the removable key 108 is inserted, an expanding force is generated in the circumferential direction of the shaft, between the removable key 108 on the one hand and the fixed key 101 and housing 100 on the other.

As the removable key 108 is progressively driven home, this force is transmitted to the bearing 104, 105 from one axial edge 107 and from that end 109 from which the key 108 is inserted, while the further end 110 is not stressed. This can develop slight torsion in the bearing which resists the insertion of the key. It is found in practice that the removable key 108 can be difficult to insert without damaging it, even while it is supported by the fixed key 101, especially due to its small radial thickness which is limited by the radial thickness of the bearing at the base of the water groove 111.

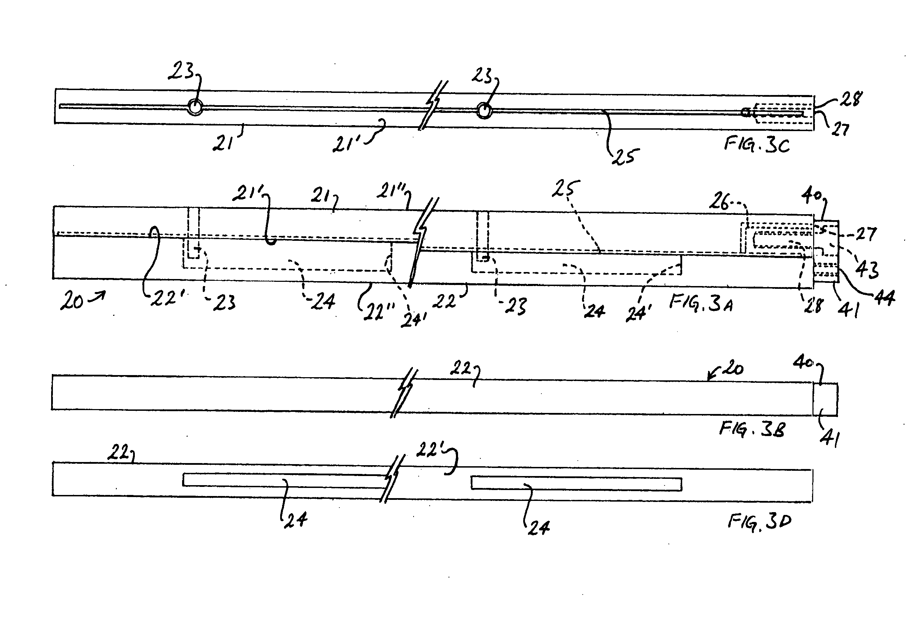

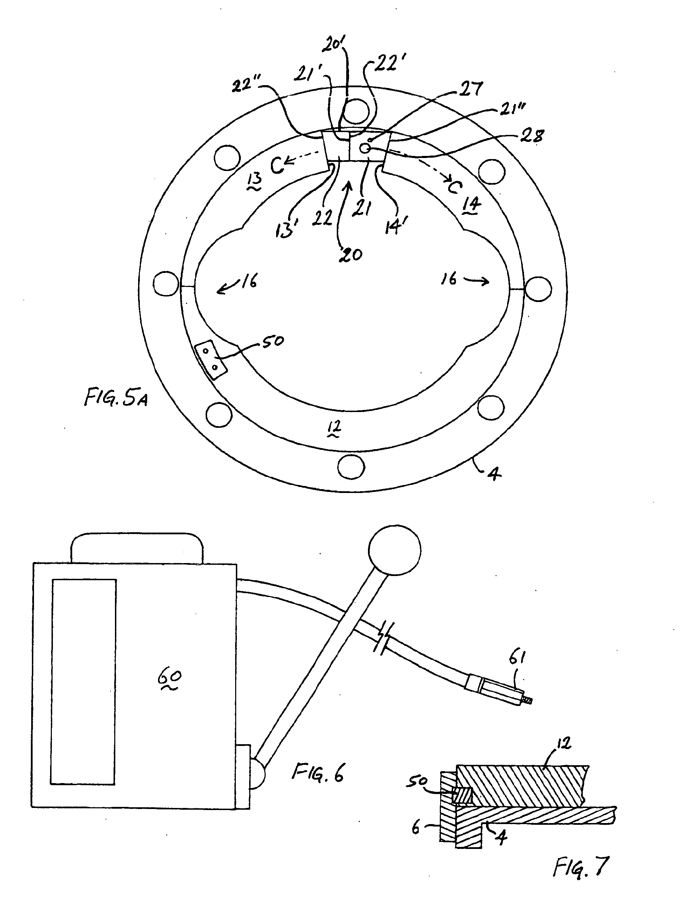

Referring to Figs. 3A - 3D and Fig. 5A, the key assembly 20 comprises a pair of oppositely tapered, elongate keys or wedges 21, 22, made from a suitable grade of bronze. Fig. 3A best shows the tapered shape of the keys as they would appear in the fully installed position, seen in plan view from directly above the shaft, with their respective inner abutment surfaces 21', 22' slidingly engaged together. The abutting surfaces 21', 22' are generally aligned in the longitudinal (axial) direction with the longitudinal axis (L, Fig.1) of the shaft, and diverge slightly from the axis of the shaft in the circumferential direction (C, Fig. 5A) of the shaft by a small angle which defines the amount of taper. The abutting surfaces 21', 22' are substantially aligned in transverse section with a radius of the shaft, as best seen in Fig. 5A.

Two dowels 23 extend from the inner abutment surface 21' of the first key 21 and engage slidingly in grooves 24 in the inner abutment surface 22' of the second key 22. This ensures that the two keys are accurately aligned during installation.

A shallow groove 25 is provided in the inner abutment surface 21' of the first key 21 and connected via a narrow bore 26 to a threaded orifice 27 in one end of the key. Referring to Fig. 6, a portable, high pressure hand pump 60 containing a reservoir of oil or other suitable lubricant is provided with a corresponding threaded connector 61 which may be connected to the orifice 27 during installation or, especially, extraction of the key assembly. Lubricant may then be pumped under high pressure (for example, 100,000 psi) between the respective abutting surfaces 21', 22' of the keys, if necessary by a diver working underwater, which assists in separating the keys when they are extracted.

The outer edge 21", 22" of each respective key 21, 22 forms an outer abutment surface which abuts a respective axial edge 14', 13' of the bearing. The outer abutment surfaces 21", 22" are parallel in the longitudinal (axial) direction but (as best seen in Fig. 5A) diverge radially outwardly in transverse section so that the key assembly 20 has a dovetailed shape. In the example shown, the outer abutment surfaces 21", 22" lie along respective radii of the shaft. It has been found that the radially outward surface 20' of the key assembly may be left flat, which simplifies manufacture, although it may if desired be machined to fit the inner curvature of the housing 4.

During installation, the keys 21, 22 are assembled together and axially offset so that the dowels 23 lie at the ends 24' of the grooves 24. The bearing segments 12, 13, 14 are inserted one by one into the annular gap between the shaft and the housing 4, and the key assembly 20 is then slidingly inserted from one end of the bearing into the annular gap between the shaft and housing and between the axial edges 13', 14' of the bearings. One or both of the keys 21, 22 are then pressed or driven in opposite axial directions until they lie in the fully installed position as shown in Figs. 3A and 5A.

As the inner abutment surfaces 21', 22' slide past each other, the taper expands the key assembly in the circumferential direction of the shaft, pressing the outer abutment surfaces 21", 22" against the respective axial edges 14', 13' of the bearing. This generates hoop stress along the entire length of the bearing, engaging it frictionally in the bore of the housing, while the dovetailed shape of the outer abutment surfaces urges the key assembly radially outwardly until it abuts the housing as shown in Fig. 5A.

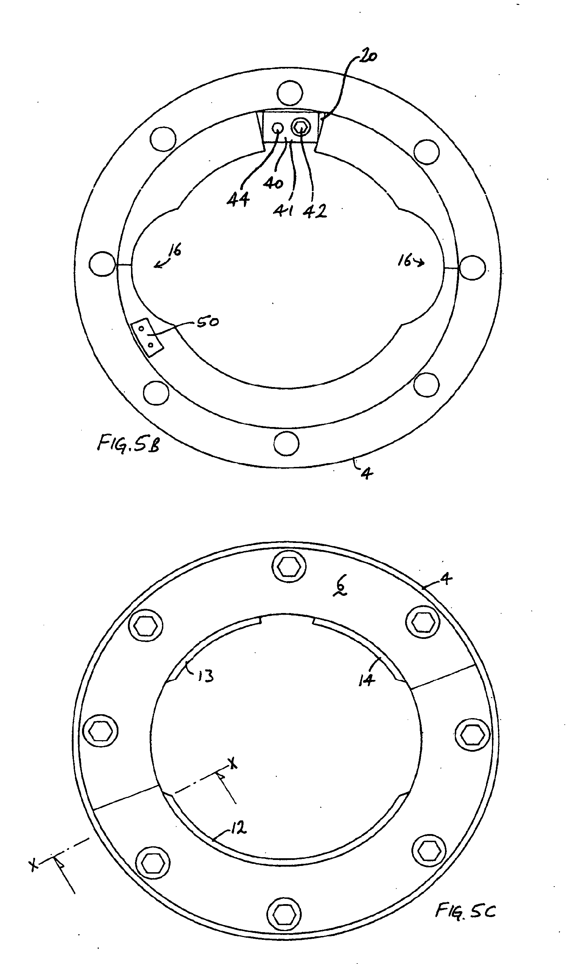

Referring also to Figs. 5B and 5C, the key extraction tool 40 comprises a flat, bronze plate 41 together with a socket head retaining screw 42 and an extraction screw (not shown). After the key assembly 20 is installed, the plate 41 is secured to one end surface of the first key 21 by the retaining screw 42, which is inserted through a countersunk hole 43 in the plate and engaged with a tapped bore 28 in the first key 21. Dowels (not shown) are also provided, which engage in corresponding bores in the first key to ensure that the plate 41 is correctly positioned. In the installed position, the outer face of the plate 41 lies flush with the ends of the bearing segments. A split retaining ring 6 is then bolted to the housing 4 so that it covers the ends of the bearing segments and the key assembly and extraction tool, restraining the bearing assembly against axial movement.

When the key assembly is to be extracted, the retaining ring 6 is separated from the housing and removed and an extraction screw, which may be an ordinary hexagonal headed screw, is inserted into a tapped hole 44 in the plate 41 so that it bears axially against the adjacent end surface of the second key 22. Torque is applied to the extraction screw so that it extends axially from the inner face of the plate 41 (abutting the second key 22) and forces the plate 41 axially away from the second key 22, displacing the two keys and relieving the hoop stress.

In a development, the extraction tool may be adapted to also assist insertion of the keys, for example by securing the further end of the second key 22 to the corresponding retaining ring 6 and providing a tapped bore in the nearer end of the second key. A screw may then be inserted through a plain hole in the plate 44 and engaged with the tapped hole in the second key, and then progressively tightened to draw the plate 41 towards the second key.

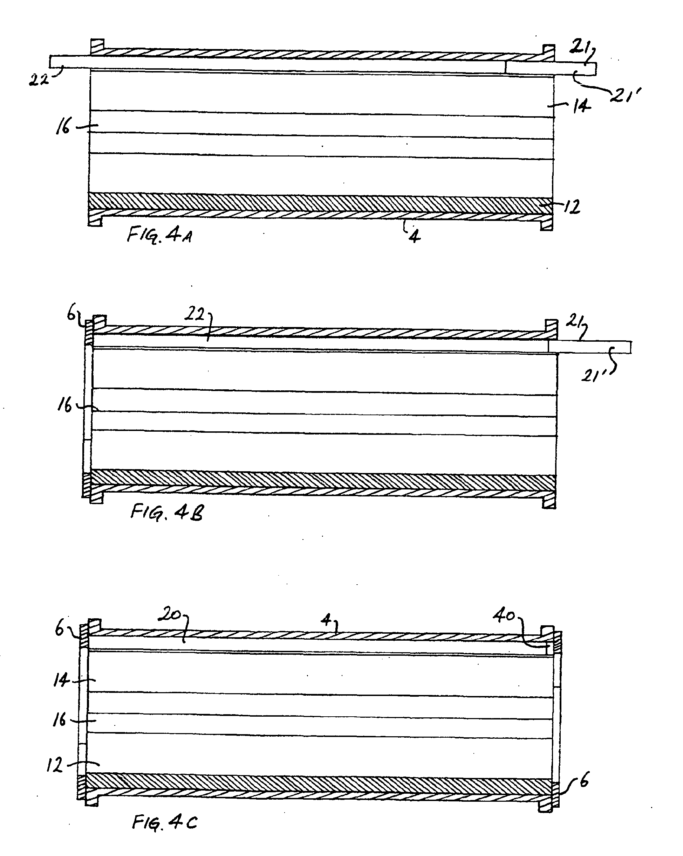

Referring to Fig. 4A, in a first method of installation the key assembly 20 is inserted into the housing and then each key 21, 22 is pressed or driven, either simultaneously or alternately, axially into the housing in opposite directions. The protruding length of each key is only half of the combined axial displacement of the two keys, which makes each key more rigid and hence easier to insert without bending it. In this method, both ends of the bearing are stressed symmetrically and torsion is avoided.

Referring to Fig. 4B, in a second method of installation, one retaining ring 6 is first fixed to the housing, and the bearing segments and key assembly are inserted from the other end of the housing so that the second key 22 abuts the retaining ring. The first key 21 is then driven in from its projecting end until it reaches the fully assembled position. It is found that, due to the thickness of the keys, this can be accomplished in practice by a single diver working beneath the hull of a ship.

Referring to Fig. 4C, the extraction tool 40 is fixed to the first key 21 so that its outer face is flush with the outer ends of the bearings. The retaining rings 6 are then attached to the housing to restrain the bearing assembly axially.

Optionally, an additional bronze key 50 may also be provided to further guard against rotation of the bearing. Referring to Figs. 5A - 5C and to Fig. 7, the key 50 is fitted in a pocket formed in one end of the bearing segment 12 so that it protrudes slightly beyond the end face of the bearing. A corresponding, shallow pocket is formed in the retaining ring 6 which receives the protruding end of the additional key 50 when the retaining ring is fixed in position on the housing 4.

Provision may also be made for a poker gauge (not shown) to be inserted through the housing 4 in order to measure the position of the shaft.

In summary, a preferred embodiment provides a marine propeller shaft bearing assembly comprising a polymer bearing which is divided into three elongate segments and is retained in a housing by a removable key assembly. The key assembly is located at the top of the housing and comprises two elongate, tapered keys which extend axially along the housing and cooperate to induce a hoop stress in the bearing. The keys are inserted into the housing and then one or both keys are displaced relative to one another in opposite axial directions into the assembled position. An extraction tool may be engaged with the adjacent ends of the keys, and a lubricant may be pumped under pressure between the keys to assist disassembly.

In the embodiments described above, the elongate key assembly comprises two elongate keys. In alternative embodiments however, more than two keys may be provided, and each key may not necessarily be elongate. For example, the removable key assembly may comprise a single, elongate carrier element, engaging one axial edge of the bearing and having a plurality of expanding elements extendable therefrom to engage the opposite axial edge of the bearing. Each expanding element may be extended from the carrier element, for example, by means of a mechanical or hydraulic actuator, so that the expanding force is exerted between the carrier (forming one key) on the one hand, and each expanding element (forming the corresponding second key) on the other. Alternatively, pairs of expanding elements may be arranged along the carrier element, each pair forming respective first and second keys, and the expanding force generated simultaneously between each pair. Suitable expanding mechanisms might include threaded, tapered or eccentric shafts, cams and the like. It is to be understood therefore that each of the first and second keys may be any suitable shape and may comprise more than one component.

Other embodiments within the scope of the appended claims will be evident to those skilled in the art. It will be appreciated that, although the extraction tool and high pressure key lubrication system are described with reference to the novel key assembly, they can readily be adapted for use with conventional shaft bearing assemblies. Likewise, although the invention is described with reference to generally horizontal marine propeller shafts, it is applicable to any other rotating or reciprocating shaft which is mounted in a bearing in a tubular housing, whether horizontal, vertical or inclined, and including both water lubricated and oil lubricated bearings made from lignum vitae, metals, plastics and/or elastomers. In particular, the invention has been found to be suitable for use in rudder bearings.

## Claims

1. A bearing assembly for supporting a shaft (1) in a housing (4),
the bearing assembly comprising a bearing (10) retained by hoop stress in an annular gap between the shaft and the housing,
together with an elongate key assembly (20),
the key assembly including first and second keys (21, 22) arranged in the annular gap between opposite axial edges (13', 14') of the bearing, the keys being displaceable, one relative to the other, so as to expand the key assembly and induce the hoop stress in the bearing by exerting an expanding force on the said opposite axial edges (13', 14') of the bearing in a generally circumferential direction;
both keys being slideable relative to the housing, such that both keys may be slidingly inserted into and slidingly withdrawn from the said annular gap between the opposite axial edges (13', 14') of the bearing when installing and uninstalling the bearing.

2. A bearing assembly according to claim 1,
**characterised in that** the first and second keys comprise oppositely tapered first and second elongate wedges,
such that the key assembly may be expanded by relative displacement of the keys in opposite axial directions parallel with the longitudinal axis of the shaft.

3. A bearing assembly according to claim 2, **characterised in that** a tool (40) is provided which engages adjacent respective ends of the first and second keys,
wherein the tool is operable to displace the first key axially relative to the second key.

4. A bearing assembly according to any preceding claim, **characterised in that** the first key (21) has a first inner abutment surface (21') which engages a corresponding second inner abutment surface (22') of the second key (22),
and the first key is provided with a conduit (25, 26) communicating with the first abutment surface,
and a supply of pressurised lubricant (60) is arranged in communication with the conduit.

5. A bearing assembly according to any preceding claim, **characterised in that** each of the first and second keys has an elongate outer abutment surface (21", 22") which engages a respective axial edge (14', 13') of the bearing,
and in an installed position of the key assembly, the outer abutment surfaces diverge in the radially outward direction of the shaft in transverse section.

6. A bearing assembly according to any preceding claim, wherein the shaft is generally horizontal.

7. A bearing assembly according to claim 6, **characterised in that** the key assembly is located above the shaft in a position between 300° and 60° of circumference.

8. A bearing assembly according to claim 6, **characterised in that** the key assembly is located substantially at the uppermost (0° / 360° or 12 o'clock) position, which is to say, above the shaft and substantially in line with the vertical diameter thereof.

9. A bearing assembly according to claim 7 or claim 8, **characterised in that** the bearing is divided into at least two segments (12, 13, 14) extending in parallel along the longitudinal axis of the shaft,
wherein a bottom said segment (12) extends at least from the 120° position to the 240° position so as to encompass at least 120° of the lowermost portion of the circumference of the shaft.

10. A bearing assembly according to claim 9, **characterised in that** the bottom segment (12) extends substantially from the 90° (3 o'clock) position to the 270° (9 o'clock) position.

11. A bearing assembly according to any of claims 6 - 10, **characterised in that** the bearing is divided into three segments (12, 13, 14) extending in parallel along the axis of the shaft.

12. A bearing assembly according to any of claims 6 - 10, **characterised in that** two elongate grooves (16) are formed in the bearing respectively at the 90° (3 o'clock) and 270° (9 o'clock) positions.

13. A method for retaining a bearing (10) in an annular gap between a shaft (1) and a coaxial housing (4), comprising the steps of
i) providing an elongate key assembly (20) including first and second keys (21, 22);
ii) inserting the bearing into the gap such that opposite axial edges (13', 14') of the bearing are spaced apart;
iii) inserting the first and second keys slidingly into the gap between the opposite axial edges of the bearing such that the key assembly extends axially along the gap; and
iv) displacing the keys, one relative to the other, so as to generate an expanding force on the bearing in a generally circumferential direction,
such that the keys respectively engage the opposite axial edges of the bearing and so induce a hoop stress in the bearing.

14. A method according to claim 13, **characterised in that**, at step (iv), the first and second keys are both displaced, alternately or simultaneously in opposite axial directions parallel with the longitudinal axis of the shaft.

15. A method according to claim 13, **characterised in that**, at step (iv), the first key is restrained axially relative to the housing while the second key is displaced axially in parallel with the longitudinal axis of the shaft.

16. A method according to claim 13, **characterised in** the further steps of
v) engaging a tool (40) with adjacent respective ends of the first and second keys, and
vi) operating the tool so as to axially displace one of the first and second keys relative to the other,
so as to increase the hoop stress during assembly or relieve the hoop stress during subsequent disassembly.

17. A method according to claim 13, **characterised in** the further step of
vii) pumping a lubricant (60) under pressure between mutually abutting surfaces (21', 22') of the first and second keys during assembly or subsequent disassembly.

## Patentansprüche

1. Lageranordnung für eine Welle (1) in einem Gehäuse (4),
die Lageranordnung umfassend ein Lager (10), das durch Ringspannung gemeinsam mit einer länglichen Halteschlüsselanordnung (20) in einem Ringspalt zwischen der Welle und dem Lager gehalten wird,
wobei die Halteschlüsselanordnung erste und zweite Passfedern (21,22) aufweist, die in dem Ringspalt zwischen einander gegenüberliegenden axialen Kanten (13', 14') des Lagers angeordnet sind und die Passfedern relativ zueinander verschiebbar sind, so dass die Halteschlüsselanordnung gespreizt und die Ringspannung in dem Lager induzieren, indem sie eine Spreizkraft auf die besagten, einander gegenüberliegenden Kanten (13', 14') des Lagers allgemein in Umfangsrichtung ausüben;
wobei beide Passfedern gleitend relative zu dem Gehäuse verschiebbar sind, so dass beide Passfedern bei der Installation und beim Ein- und Ausbau des Lagers gleitend in den besagten Ringspalt zwischen den gegenüberliegenden radialen Kanten (13', 14') eingeführt und wieder aus diesem entfernt werden können.

2. Lageranordnung gemäß Anspruch 1,
**dadurch gekennzeichnet, dass** die erste und zweite Passfeder erste und zweite in entgegengesetzter Richtung zueinander angeschrägte längliche Kanten aufweisen,
so dass die Halteschlüsselanordnung durch relatives Verschieben der Passfedern in entgegengesetzter Richtung zueinander parallel zur Längsachse der Welle gespreizt werden kann.

3. Lageranordnung gemäß Anspruch 2, **dadurch gekennzeichnet, dass** ein Werkzeug (40) vorgesehen ist, das in die jeweils aneinander angrenzenden Enden der ersten und zweiten Passfedern eingreift,
wobei das Werkzeug so betätigt werden kann, dass die erste Passfeder relativ zu der zweiten Passfeder axial verschoben wird.

4. Lageranordnung gemäß einem beliebigen der vorhergehenden Ansprüche, **dadurch gekennzeichnet, dass** die erste Passfeder (21) eine erste innere Auflagefläche (21') aufweist, die in eine entsprechende zweite innere Auflagefläche (22') der zweiten Passfeder (22) eingreift,
und dass die erste Passfeder einen Kanal (25, 26) aufweist, der mit der ersten Auflagefläche kommuniziert,
und dass eine Quelle von Schmierstoff (60) unter Druck mit diesem Kanal kommunizierend angeordnet ist.

5. Lageranordnung gemäß einem beliebigen der vorhergehenden Ansprüche, **dadurch gekennzeichnet, dass** jede der ersten und zweiten Passfedern eine längliche, äußere Auflagefläche (21", 22") aufweist, die jeweils in eine entspreche axiale Kante (14', 13') des Lagers eingreift,
und dass in einer installierten Lage der Passfederanordnung die äußern Auflageflächen in Querschnittsrichtung der Welle radial nach außen voneinander zu liegen kommen.

6. Lageranordnung gemäß einem beliebigen der vorhergehenden Ansprüche, wobei die Welle insgesamt horizontal verläuft.

7. Lageranordnung gemäß Anspruch 6, **dadurch gekennzeichnet, dass** die Passfederanordnung in einer Umfangsrichtung der Welle in einer Position zwischen 300° und 60° angeordnet ist.

8. Lageranordnung gemäß Anspruch 6, **dadurch gekennzeichnet, dass** sich die Passfederanordnung im Wesentlichen in der obersten Lage (0°/ 360° bzw. 12 Uhr), das heißt über der Welle und im Wesentlichen mit ihrem lotrechten Durchmesser fluchtendend befindet.

9. Lageranordnung gemäß Anspruch 7 oder 8, **dadurch gekennzeichnet, dass** die Lageranordnung in wenigstens zwei Segmente (12, 13, 14) unterteilt ist, die parallel zur Längsachse der Welle verlaufen,
wobei sich ein unteres besagtes Segment (12) von wenigstens der 120°-Position bis zur 240°- Position erstreckt, so dass es wenigstens 120° des untersten Bereich des Wellenumfangs bestreicht.

10. Lageranordnung gemäß Anspruch 9, **dadurch gekennzeichnet, dass** sich das unterste Segment (12) im Wesentlichen von der 90°- (bzw. der 3 Uhr-) Position bis zur 270°- (bzw. der 9 Uhr-) Position erstreckt.

11. Lageranordnung gemäß Anspruch 6 - 10, **dadurch gekennzeichnet, dass** die Lageranordnung in drei Segmente (12, 13, 14) unterteilt ist, die parallel zur Längsachse der Welle verlaufen.

12. Lageranordnung gemäß einem beliebigen der Ansprüche 6-10, **dadurch gekennzeichnet, dass** zwei länglichen Nuten (16) in der 90°-(bzw. der 3 Uhr-) und. der 270°- (bzw. der 9 Uhr-) Position in dem Lager vorgesehen sind.

13. Methode zur Sicherung eines Lagers (19) in einem Ringspalt zwischen einer Welle (1) und einem koaxial verlaufenden Gehäuse (4), umfassend die Schritte
i) Bereitstellung einer eine erste und zweite Passfeder (10, 21) umfassenden, länglichen Passfederanordnung (29);
ii) Einführung des Lagers in den Spalt so dass gegenüberliegende Kanten (13', 14') der des Lagers im Abstand zueinander zu liegen kommen;
iii) gleitende Einführung erster und zweiter Passfedern in die Lücke zwischen den einander axial gegenüberliegenden Kanten des Lagers auf solche Art und Weise, dass sich die Passfederanordnung über die Länge der Lücke erstreckt; und
iv) Abspreizen der Passfedern aus ihrer Lage zueinander, so dass eine Spreizkraft allgemein in Umfangsrichtung auf das Lager ausgeübt wird,
so dass die Passfedern jeweils in gegenüberliegende Axialkanten des Lagers eingreifen und so eine Ringspannung in dem Lager induzieren.

14. Methode gemäß Anspruch 13, **dadurch gekennzeichnet, dass** in Schritt (iv) die erste und die zweite Passfeder wechselweise oder beide gleichzeitig in entgegengesetzter Richtung zueinander parallel zur Längsachse der Welle verschoben werden.

15. Methode gemäß Anspruch 13, **dadurch gekennzeichnet, dass** in Schritt (iv) die erste Passfeder axial relativ zu dem Gehäuse zurückgehalten wird, während die zweite Passfeder im Wesentlichen axial parallel zur Längsachse der Welle verschoben wird.

16. Methode gemäß Anspruch 13, **gekennzeichnet durch** die weiteren Schritte
v) Einrasten eines Werkzeugs (40) in aneinander angrenzende Enden der ersten und zweiten Passfeder, und
vi) Betätigung des Werkzeugs zur axialen Verschiebung der ersten und zweiten Passfeder relativ zueinander,
zur Steigerung der Ringspannung während des Zusammenbaus oder zum Abbau der Ringspannung während des späteren Zerlegens.

17. Methode gemäß Anspruch 13, **gekennzeichnet durch** den weiteren Schritt
vii) des Einpumpens eines Schmierstoffs (60) unter Druck zwischen gegeneinander liegenden Flächen (21', 22') der ersten und zweiten Passfeder während des Zusammenbaus oder des späteren Zerlegens.

## Revendications

1. Ensemble palier permettant de supporter un arbre (1) dans un logement (4),
l'ensemble palier comportant un palier (10) retenu par contrainte annulaire dans un espace annulaire entre l'arbre et le logement,
conjointement avec un ensemble de clés allongées (20),
l'ensemble de clés comprenant des première et seconde clés (21, 22) agencées dans l'espace annulaire entre des bords axiaux opposés (13', 14') du palier, les clés étant en mesure d'être déplacées, l'une par rapport à l'autre, de manière à étendre l'ensemble de clés et induire la contrainte annulaire dans le palier en exerçant une force d'expansion sur lesdits bords axiaux opposés (13', 14') du palier dans une direction généralement circonférentielle ;
les deux clés étant en mesure de coulisser par rapport au logement, de sorte que les deux clés peuvent être insérées de manière coulissante dans ledit, et retirées de manière coulissante en provenance dudit, espace annulaire entre les bords axiaux opposés (13', 14') du palier lors de l'installation et de la désinstallation du palier.

2. Ensemble palier selon la revendication 1,
**caractérisé en ce que** les première et seconde clés comportent des premier et second coins allongés à extrémités coniques opposées,
de sorte que l'ensemble de clés peut être étendu par le déplacement relatif des clés dans des directions axiales opposées parallèles par rapport à l'axe longitudinal de l'arbre.

3. Ensemble palier selon la revendication 2, **caractérisé en ce qu'**un outil (40) est mis en oeuvre à des fins de mise en prise avec des extrémités respectives adjacentes des première et seconde clés,
dans lequel l'outil sert à déplacer la première clé dans la direction axiale par rapport à la seconde clé.

4. Ensemble palier selon l'une quelconque des revendications précédentes, **caractérisé en ce que** la première clé (21) a une première surface de mise en appui intérieure (21') qui entre en prise avec une seconde surface de mise en appui intérieure correspondante (22') de la seconde clé (22),
et la première clé comporte un conduit (25, 26) en communication avec la première surface de mise en appui,
et une alimentation de lubrifiant sous pression (60) est agencée en communication avec le conduit.

5. Ensemble palier selon l'une quelconque des revendications précédentes, **caractérisé en ce que** chacune des première et seconde clés a une surface de mise en appui extérieure allongée (21", 22") qui entre en prise avec un bord axial respectif (14', 13') du palier,
et dans une position installée de l'ensemble de clés, les surfaces de mise en appui extérieures vont en divergeant dans la direction allant de manière radiale vers l'extérieur de l'arbre dans une section transversale.

6. Ensemble palier selon l'une quelconque des revendications précédentes, dans lequel l'arbre est généralement horizontal.

7. Ensemble palier selon la revendication 6, **caractérisé en ce que** l'ensemble de clés est situé au-dessus de l'arbre dans une position entre 300° et 60° de circonférence.

8. Ensemble palier selon la revendication 6, **caractérisé en ce que** l'ensemble de clés est situé sensiblement au niveau de la position se trouvant le plus en haut (0°/360° ou midi), c'est-à-dire, au-dessus de l'arbre et sensiblement de manière alignée sur le diamètre vertical de celui-ci.

9. Ensemble palier selon la revendication 7 ou la revendication 8, **caractérisé en ce que** le palier est divisé en au moins deux segments (12, 13, 14) s'étendant de manière parallèle le long de l'axe longitudinal de l'arbre,
dans lequel un dit segment inférieur (12) s'étend au moins depuis la position de 120° jusqu'à la position de 240° de manière à couvrir au moins 120° de la partie se trouvant le plus en bas de la circonférence de l'arbre.

10. Ensemble palier selon la revendication 9, **caractérisé en ce que** le segment inférieur (12) s'étend sensiblement de la position de 90° (15 heures) jusqu'à la position de 270° (9 heures).

11. Ensemble palier selon l'une quelconque des revendications 6 à 10, **caractérisé en ce que** le palier est divisé en trois segments (12, 13, 14) s'étendant de manière parallèle le long de l'axe de l'arbre.

12. Ensemble palier selon l'une quelconque des revendications 6 à 10, **caractérisé en ce que** deux rainures allongées (16) sont formées dans le palier respectivement sur les positions de 90° (15 heures) et de 270° (9 heures).

13. Procédé permettant de retenir un palier (10) dans un espace annulaire entre un arbre (1) et un logement coaxial (4), comportant les étapes consistant à :
i) mettre en oeuvre un ensemble de clés allongées (20) comprenant des première et seconde clés (21, 22) ;
ii) insérer le palier dans l'espace de sorte que des bords axiaux opposés (13', 14') du palier sont espacés l'un par rapport à l'autre ;
iii) insérer les première et seconde clés de manière coulissante dans l'espace entre les bords axiaux opposés du palier de sorte que l'ensemble de clés s'étend de manière axiale le long de l'espace ; et
iv) déplacer les clés, l'une par rapport à l'autre, de manière à générer une force d'expansion sur le palier dans une direction généralement circonférentielle,
de sorte que les clés entrent respectivement en prise avec les bords axiaux opposés du palier et ce à des fins d'induction d'une contrainte annulaire dans le palier.

14. Procédé selon la revendication 13, **caractérisé en ce que**, lors de l'étape (iv), les première et seconde clés sont toutes les deux déplacées, de manière alternée ou simultanée dans des directions axiales opposées de manière parallèle par rapport à l'axe longitudinal de l'arbre.

15. Procédé selon la revendication 13, **caractérisé en ce que**, lors de l'étape (iv), la première clé est retenue dans la direction axiale par rapport au logement alors que la seconde clé est déplacée dans la direction axiale de manière parallèle par rapport à l'axe longitudinal de l'arbre.

16. Procédé selon la revendication 13, **caractérisé par** les étapes supplémentaires consistant à
v) mettre un outil (40) en prise avec des extrémités respectives adjacentes des première et seconde clés, et
vi) faire fonctionner l'outil de manière à déplacer dans la direction axiale l'une des première et seconde clés par rapport à l'autre,
de manière à augmenter la contrainte annulaire lors du montage ou à réduire la contrainte annulaire lors du démontage ultérieur.

17. Procédé selon la revendication 13, **caractérisé par** l'étape supplémentaire consistant à
vii) pomper un lubrifiant (60) sous pression entre des surfaces se mettant mutuellement en appui (21', 22') des première et seconde clés lors de l'assemblage ou du désassemblage ultérieur.
